(19) **Europäisches Patentamt**
**European Patent Office**
**Office européen des brevets**

(11) **EP 1 132 225 B1**

(12) **FASCICULE DE BREVET EUROPEEN**

(45) Date de publication et mention
de la délivrance du brevet:
**02.07.2008 Bulletin 2008/27**

(51) Int Cl.:
***B60H 1/00*** *(2006.01)*

(21) Numéro de dépôt: **01105280.0**

(22) Date de dépôt: **05.03.2001**

(54) **Régulation perfectionnée de la température, de la vitesse et la distribution de l'air ventilé dans un habitacle de véhicule automobile**

Verbesserte Regelung von Temperatur, Geschwindigkeit und Verteilung der ausgeblasenen Luft in einem Kraftfahrzeuginnenraum

Improved regulation of temperature, speed and distribution of ventilated air in a vehicle passenger compartment

(84) Etats contractants désignés:
**DE ES IT**

(30) Priorité: **07.03.2000 FR 0002917**

(43) Date de publication de la demande:
**12.09.2001 Bulletin 2001/37**

(73) Titulaire: **VALEO SYSTEMES THERMIQUES**
**78321 Le Mesnil St Denis Cedex (FR)**

(72) Inventeurs:
• **Remond, Bernard**
**77240 Cesson (FR)**

• **Schwob, Michel**
**78400 Chatou (FR)**
• **Benalia, Atallah**
**75014 Paris (FR)**

(74) Mandataire: **Croonenbroek, Thomas Jakob**
**InnoVinciA**
**7 Place des Arts**
**74200 Thonon-les-Bains (FR)**

(56) Documents cités:
**EP-A- 0 968 855       FR-A- 2 779 097**
**US-A- 4 930 698**

**Description**

L'invention concerne un dispositif de commande d'une installation de ventilation, chauffage et/ou climatisation d'un habitacle de véhicule automobile.

Un dispositif de ce type est habituellement muni d'un module de commande pour gérer le fonctionnement d'au moins un équipement de l'installation, comme par exemple un pulseur produisant un flux d'air ventilé dans l'habitacle, ou encore un radiateur de chauffage pour augmenter la température de ce flux d'air. Le document EP 0 968 855, qui est considéré comme l'état de l'art le plus proche, décrit un tel dispositif.

Ainsi, un tel module de commande agit sur un actionneur de réglage de l'équipement pour ajuster la température et/ou la vitesse du flux d'air que délivre l'installation, le cas échéant en fonction d'une consigne que fournit un passager de l'habitacle. Généralement, cette consigne, relative à une configuration aérothermique souhaitée par le passager, est émise par l'intermédiaire d'un organe de commande à disposition du passager.

Dans un dispositif de commande du type précité, le module de commande coopère avec un module de régulation propre à interpréter une variation de la consigne et/ou une variation d'un paramètre aérothermique dans l'habitacle. Le module de commande agit alors sur l'actionneur de réglage pour modifier la température et/ou la vitesse du flux d'air délivré, en fonction des variations précitées.

Dans les dispositifs de commande connus, les variations des paramètres aérothermiques sont estimées à partir de mesures donnant accès à la température et à la vitesse d'air ventilé dans l'habitacle. En effet, il est convenu de façon classique qu'une estimation de la température et/ou de la vitesse d'air ventilé permettent, en tant que telles, de définir un confort susceptible d'être ressenti par un passager du véhicule. Cependant, dans un habitacle de véhicule automobile, le ressenti thermique d'un passager dépend, certes, de la température d'air ventilé, mais aussi de sa vitesse, ainsi que d'autres paramètres, comme un rayonnement solaire ou autre.

Or, il est souhaité actuellement une régulation qui puisse tenir compte directement du confort thermique que ressentent réellement les passagers.

La présente invention vient améliorer la situation.

Elle porte sur un dispositif de commande, du type comprenant :

- au moins une entrée, pour recevoir au moins un signal représentatif d'une information relative à un paramètre aérothermique choisi,
- une sortie reliée à au moins un actionneur de réglage d'un équipement de l'installation, et
- un module de commande connecté à ladite sortie et capable de piloter l'actionneur de réglage en vue de modifier le fonctionnement de l'équipement.

Selon une définition générale de l'invention, ladite entrée est propre à recevoir des signaux respectifs représentatifs d'une température et d'une vitesse d'air locales dans une région prédéterminée de l'habitacle, et le dispositif comporte un module de calcul apte à évaluer au moins une température de confort d'un passager situé dans ladite région prédéterminée de l'habitacle, sur la base du paramètre aérothermique, desdits signaux, et de modèles choisis, comme on le verra plus loin. Le module de commande est alors agencé pour coopérer avec le module de calcul en vue de modifier ou non le fonctionnement de l'équipement en fonction de cette évaluation de la température de confort, laquelle correspond avantageusement à une configuration aérothermique souhaitée dans l'habitacle.

On entend ici par "température de confort" (ou, ci-après, "température équivalente") une température équivalente à une température considérée comme uniforme dans un milieu virtuel où la vitesse forcée de l'air serait nulle. On estime qu'un passager, dans cette ambiance, échange la même chaleur par convection naturelle que la chaleur qu'il échangerait par conduction, par convection et par radiation dans un milieu réel. Ainsi, la température de confort permet de modéliser, le cas échéant, les effets combinés d'une température d'air ventilé, d'une vitesse d'air ventilé et d'une température moyenne radiante.

La présente invention propose alors une application de l'évaluation d'une telle température au confort thermique d'un passager dans un habitacle de véhicule automobile.

Préférentiellement, le dispositif comprend :

- une première entrée, propre à recevoir une consigne relative à une configuration aérothermique souhaitée dans l'habitacle, et
- une seconde entrée, pour recevoir au moins le signal précité, représentatif d'une information relative au paramètre aérothermique choisi,

tandis que le module de calcul est apte à évaluer la température de confort à partir du paramètre aérothermique et en tenant compte avantageusement de cette consigne.

Le dispositif comporte de préférence une mémoire pour stocker la consigne. La seconde entrée est reliée à cette mémoire pour stocker en outre une valeur représentative du paramètre aérothermique. Le module de calcul coopère alors avec la mémoire pour évaluer la température de confort.

Dans une réalisation préférée, la mémoire coopère en retour avec le module de calcul pour stocker la température de confort évaluée. Le module de calcul est agencé pour estimer une variation entre une température de confort évaluée et une température de confort mémorisée. Le module de commande ajuste alors (ou non) le fonctionnement de l'équipement en fonction de la variation estimée de la température de confort, en vue de maintenir une configuration aérothermique souhaitée dans l'habitacle.

Dans une variante, le module de calcul coopère avec la mémoire et la première et/ou la seconde entrée pour estimer une variation du paramètre aérothermique et/ou pour tenir compte d'une variation de la consigne reçue. Le module de commande est agencé pour ajuster ou non le fonctionnement de l'équipement en fonction d'au moins une variation estimée du paramètre aérothermique et/ou de la consigne reçue, en vue de maintenir une température de confort qui correspond à la dernière consigne reçue de configuration aérothermique souhaitée dans l'habitacle.

Dans une autre variante, le module de calcul évalue dynamiquement la température de confort et le module de commande peut modifier dynamiquement le fonctionnement de l'équipement précité, en fonction de la température de confort couramment évaluée. Cette réalisation permet avantageusement de se passer d'une mémoire pour enregistrer successivement les consignes reçues et/ou les valeurs de paramètres aérothermiques mesurées.

Pour évaluer la température de confort, le module de calcul est avantageusement capable d'établir un bilan thermique, propre à l'habitacle du véhicule, faisant intervenir les échanges par convection, par rayonnement et éventuellement par conduction (par exemple avec le siège du passager).

Les échanges par rayonnement concernent par exemple des échanges avec la structure du véhicule, les vitres ou autre, et varient notamment avec la température extérieure et, le cas échéant, avec un flux solaire incident sur le véhicule. Par ailleurs, la température moyenne à l'intérieur de l'habitacle est l'un des paramètres qui intervient dans l'examen des échanges par rayonnement pour évaluer la température de confort.

Avantageusement, la seconde entrée du dispositif selon l'invention est propre à recevoir au moins une information représentative d'une température intérieure moyenne dans l'habitacle, et le module de calcul est agencé pour estimer la température de confort en fonction de la température intérieure.

Ici et dans ce qui suit, on entend par "information représentative d'un paramètre" une information pouvant être déduite directement des mesures de ce paramètre à partir d'au moins un capteur, ou encore une information pouvant être calculée à partir de modèles choisis faisant intervenir ce paramètre (bilans thermiques, modèles aérauliques, etc), comme on le verra en détail plus loin.

Les échanges par convection concernent des échanges avec un flux d'air ventilé dans une région prédéterminée de l'habitacle. Les paramètres de ce flux, tels que sa température et sa vitesse, interviennent à ce titre dans l'estimation de la température de confort.

Les différents paramètres tels que la température intérieure moyenne et les température et vitesse locales, peuvent être mesurés directement par des capteurs reliés à la seconde entrée du dispositif selon l'invention. Cependant, de tels capteurs seraient onéreux ou leur mise en oeuvre serait délicate. Par exemple, un capteur en température moyenne peut nécessiter une ventilation propre, constante. Par ailleurs, des capteurs de température ou de vitesse locales devraient venir pratiquement en contact avec la peau ou les vêtements du passager.

Dans une forme de réalisation particulièrement avantageuse, la seconde entrée est propre à recevoir des signaux respectifs représentatifs d'une température et d'une vitesse de l'air que ventile l'installation.

Le module de calcul est alors agencé pour estimer les température et vitesse d'air locales précitées, avantageusement selon un modèle aéraulique choisi de l'habitacle, ce modèle aéraulique faisant intervenir la température et la vitesse de l'air ventilé par l'installation.

Un tel modèle aéraulique, appliqué à l'habitacle d'un véhicule automobile, est au moins en partie décrit dans la demande de brevet français FR-2779097 de la Demanderesse.

Avantageusement, le module de calcul est agencé en outre pour évaluer la température intérieure moyenne dans l'habitacle en fonction de la température et de la vitesse de l'air ventilé, selon un modèle thermique choisi de l'habitacle.

Un modèle thermique de ce type, appliqué donc à l'habitacle d'un véhicule automobile, est, au moins en partie, décrit aussi dans la demande précitée FR-2779097 de la Demanderesse.

L'utilisation de tels modèles aéraulique et thermique permet, comme on le verra plus loin, de réduire le nombre de capteurs à prévoir et leur connexion à la seconde entrée précitée du dispositif selon l'invention.

Préférentiellement, la seconde entrée est propre à recevoir en outre un signal représentatif d'une température d'air extérieur, et le module de calcul est agencé pour tenir compte de la température d'air extérieur dans le modèle thermique de l'habitacle, en vue d'estimer la température intérieure moyenne.

En variante ou en complément, selon une forme de réalisation plus élaborée, la seconde entrée est propre à recevoir en outre un signal représentatif d'un flux solaire incident sur le véhicule, et le module de calcul est agencé pour tenir compte en outre du flux solaire dans le modèle thermique de l'habitacle, en vue d'évaluer la température intérieure moyenne.

Selon une caractéristique optionnelle avantageuse, la seconde entrée est propre à recevoir en outre un signal représentatif de la température d'une vitre au moins et/ou de la structure du véhicule, et le module de calcul est agencé pour évaluer la température de confort en fonction des températures de vitre et/ou de structure.

Avantageusement, le module de calcul est agencé pour évaluer les températures de vitre et/ou de structure en fonction de la température et de la vitesse d'air ventilé, préférentiellement en tenant compte en outre de la température extérieure et/ou du flux solaire.

Une telle réalisation préférentielle permet avantageusement de se passer de capteurs de température prévus sur la structure ou sur une vitre du véhicule.

Pour évaluer la vitesse d'air ventilé par l'installation, la seconde entrée peut avantageusement recevoir des signaux respectivement représentatifs :

- d'une vitesse d'air à l'extérieur de l'habitacle, déduite par exemple de la vitesse du véhicule,
- d'un régime d'un pulseur de l'installation, qui délivre un flux d'air et qui est généralement commandé électriquement, et
- d'une position d'un ou plusieurs volet de distribution du flux d'air dans l'habitacle.

Le module de calcul est alors agencé pour déduire la vitesse d'air ventilé en fonction de la vitesse d'air extérieur, du régime du pulseur et de la position du volet de distribution, selon un modèle aéraulique choisi, propre à l'installation.

Il suffit, le cas échéant, de prévoir une connexion de la seconde entrée à :

- un capteur de vitesse ou un compteur de vitesse, prévu de façon classique sur les véhicules automobiles,
- un actionneur de réglage du pulseur pour recevoir un signal électrique de commande (en courant ou plus classiquement en tension), ce signal étant représentatif du régime du pulseur, et
- un actionneur de réglage de la position du volet précité, qui peut être contrôlé électriquement par un courant ou une tension.

Pour évaluer une température d'air ventilé, la seconde entrée est avantageusement propre à recevoir des signaux représentatifs :

- d'une vitesse d'air ventilé, qui peut être déduite du modèle aéraulique précité, propre à l'installation,
- d'une température d'air chaud que délivre une source d'air chaud de l'installation, notamment un radiateur de chauffage,
- dans le cas où l'installation peut assurer une climatisation de l'habitacle, d'une température d'air froid que délivre une source d'air froid de l'installation, notamment un évaporateur d'une boucle de climatisation, et
- d'une température d'air extérieur.

Avantageusement, le module de calcul est agencé pour évaluer la température d'air ventilé en fonction de la vitesse d'air ventilé, des températures d'air chaud et/ou d'air froid, et de la température d'air extérieur, selon un modèle thermique choisi, propre à l'installation.

En définitive, pour assurer la régulation de la température de confort, il peut n'être prévu, dans le dispositif selon l'invention, qu'un capteur de température extérieure, qui se trouve couramment dans les véhicules actuels, un capteur de vitesse et, dans une variante optionnelle élaborée, un capteur de flux solaire.

Ainsi, le fonctionnement d'un dispositif de commande, au sens de la présente invention, peut être défini par les étapes suivantes :

a) recevoir et, de préférence, stocker en mémoire une consigne émanant d'un passager de l'habitacle, et relative à une configuration aérothermique souhaitée,
b) recevoir et, de préférence, stocker en mémoire au moins une valeur représentative d'un paramètre aérothermique choisi, tel qu'une température d'air extérieur, une vitesse du véhicule ou un flux solaire incident sur le véhicule,
c) estimer, selon des modèles aéraulique et thermique propres à l'installation, une température et une vitesse d'air que ventile l'installation dans l'habitacle, en fonction des réglages de l'installation et, le cas échéant, en fonction de la vitesse du véhicule et/ou de la température extérieure,
d) évaluer, selon un modèle thermique de l'habitacle, une température moyenne à l'intérieur de l'habitacle, à partir de la température et de la vitesse d'air ventilé et notamment à partir de la température extérieur et/ou du flux solaire,
e) évaluer, selon ce modèle thermique, une température de la structure et/ou d'une vitre au moins du véhicule, à partir de la température et de la vitesse d'air ventilé et notamment à partir de la température extérieur et/ou du flux solaire,
f) évaluer, selon un modèle aéraulique de l'habitacle, une température et une vitesse d'air locale où se situe le

EP 1 132 225 B1

passager, à partir de la température et de la vitesse d'air ventilé, ainsi que de la température intérieure moyenne,
g) évaluer une température de confort du passager, en fonction de la température et de la vitesse d'air locales, de la température intérieure moyenne et, le cas échéant, de la température de la structure et/ou des vitres du véhicule, l'étape e) étant optionnelle.

A ce titre, la présente invention vise aussi un procédé comprenant toutes ou parties des étapes ci-dessus.

D'autres caractéristiques et avantages de l'invention apparaîtront à l'examen de la description détaillée ci-après, et des dessins annexés sur lesquels :

-    la figure 1 représente schématiquement une installation de ventilation, chauffage et climatisation de l'habitacle d'un véhicule automobile, munie d'un dispositif de commande selon une forme de réalisation préférée de la présente invention ;

-    la figure 2 représente schématiquement les éléments d'un dispositif de commande selon cette forme de réalisation préférée ;

-    la figure 3 représente schématiquement différents échanges thermiques d'un passager à bord d'un habitacle de véhicule automobile, avec son milieu ambiant ;

-    la figure 4 est un organigramme sur lequel figurent les différents modèles et les paramètres utilisés pour évaluer la température de confort du passager, selon une forme de réalisation particulière de l'invention ;

-    la figure 5 est un organigramme sur lequel figurent différents éléments de la régulation qu'effectue le dispositif de commande dans un second mode de réalisation de l'invention ; et

-    la figure 6 est un organigramme sur lequel figurent des modèles aérauliques choisis de l'habitacle et les paramètres utilisés pour évaluer des températures de confort respectives en plusieurs régions de l'habitacle, selon une forme de réalisation préférée, plus élaborée.

La description ci-après et les dessins annexés contiennent, pour l'essentiel, des éléments de caractère certain. Ils pourront non seulement servir à mieux faire comprendre l'invention, mais aussi contribuer à sa définition, le cas échéant.

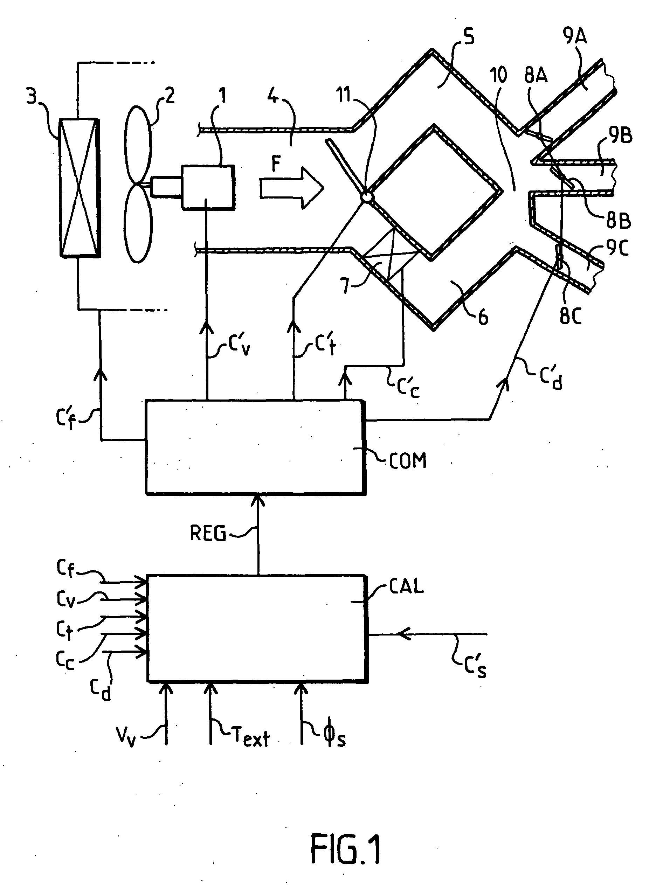

On se réfère tout d'abord à la figure 1 pour décrire une installation de ventilation, chauffage et climatisation de l'habitacle d'un véhicule automobile, commandé par un dispositif selon l'invention.

L'installation comprend tout d'abord un pulseur muni d'un moteur 1 et d'une hélice 2, montée sur l'arbre du moteur 1. Les pales de l'hélice, en rotation, produisent un flux d'air F, destiné à être ventilé dans l'habitacle du véhicule. En pratique, le moteur 1 du pulseur est alimenté électriquement, de préférence en tension. Ainsi, lorsque la tension aux bornes du moteur du pulseur croît, le flux d'air délivré F augmente, ce qui conduit à une augmentation de la vitesse Vas d'air ventilé dans l'habitacle du véhicule, de façon générale.

Ce flux d'air F est acheminé dans un conduit principal 4 de l'installation, lequel se divise, en aval en une branche d'air froid 5 et une branche d'air chaud 6, dans l'exemple décrit. La branche d'air chaud 6 comprend un radiateur de chauffage 7, propre à coopérer avec une partie du flux d'air F qui traverse la branche d'air chaud 6, en vue d'augmenter la température de cette partie du flux.

A la séparation entre les branches d'air froid 5 et d'air chaud 6, il est prévu, dans l'exemple représenté, un volet de mixage 11, capable de se déplacer (en rotation dans l'exemple représenté sur la figure 1) d'une position de fermeture de la branche d'air froid 5 et d'ouverture de la branche d'air chaud 6, à une position de fermeture de la branche d'air chaud 6 et d'ouverture de la branche d'air froid 5. Les deux branches d'air chaud 5 et d'air froid 6 se rejoignent, en aval, dans une chambre de mixage 10.

Ainsi, la température de l'air ventilé dans la chambre de mixage 10 est ajustée en fonction de la position du volet de mixage 11.

Dans l'exemple décrit, il est prévu un moteur pour le déplacement du volet de mixage 11. L'alimentation électrique de ce moteur définit ainsi la position du volet de mixage 11 et, de là, une température Tas du flux d'air ventilé dans la chambre de mixage 10.

Dans une variante du mode de réalisation représenté sur la figure 1, le volet de mixage 11 peut être supprimé, tandis qu'un radiateur de chauffage, de capacité calorifique réglable, est interposé dans le conduit principal 4 pour réchauffer le flux d'air principal que délivre le pulseur de l'installation. Dans cette variante, un fluide d'échange thermique (généralement de l'eau) parcourt le radiateur de chauffage et cède ainsi de sa chaleur au flux d'air F qui traverse le radiateur. Généralement, le débit du fluide d'échange thermique dans le radiateur permet de définir la température du

5

flux d'air F qui est destiné à être ventilé dans l'habitacle. Le débit de ce fluide est commandé par une vanne d'alimentation du radiateur de chauffage.

Il peut être prévu en outre un radiateur de chauffage additionnel, généralement à commande électrique, et comportant une pluralité de résistances à coefficient de température positif. Dans l'exemple décrit, la température Tc de la partie du flux d'air qui circule dans la branche d'air chaud 6 peut être ajustée au moyen d'un tel radiateur de chauffage additionnel (non représenté), logé dans cette branche d'air chaud 6, ou encore en prévoyant un radiateur de chauffage 7 parcouru par un fluide de débit réglable et logé dans la branche d'air chaud 6.

L'installation comporte en outre une boucle de climatisation munie d'un évaporateur 3 placé, dans l'exemple décrit, en amont du pulseur de l'installation. Lorsque le moteur du pulseur est alimenté électriquement, il se crée un flux d'air traversant l'évaporateur 3. En pratique, l'évaporateur 3 est parcouru par un fluide frigorigène dont la pression, dans cette boucle de climatisation, est variable, en vue de contrôler la capacité frigorifique de l'évaporateur 3 et, de là, la température Tf de l'air qui le traverse.

Ainsi, la température Tas dans la chambre de mixage 10 de l'installation dépend :

- de la température Tf du flux d'air en sortie de l'évaporateur 3,

- de la température Tc de la partie du flux d'air dans la branche d'air chaud 6, et

- de la position du volet de mixage 11.

La température du flux d'air en sortie de l'évaporateur 3 dépend de la pression du fluide frigorigène dans la boucle de climatisation. Pour évaluer cette température Tf, il peut être prévu de disposer directement un capteur de température immédiatement en aval de l'évaporateur 3. En variante, il peut être prévu de disposer un capteur de pression dans une portion choisie de la boucle de climatisation. La capacité frigorifique de la boucle peut être déduite de la pression du fluide frigorigène. Dans le cas où cette boucle de climatisation est munie d'un compresseur à commande externe (vanne électronique alimentée en courant), cette basse pression peut, elle-même, être déduite d'un courant d'alimentation électrique du compresseur. Inversement, la température du flux d'air en sortie de l'évaporateur 3 peut être commandée en contrôlant la pression du fluide frigorigène dans la boucle et, le cas échéant, en ajustant le courant électrique d'alimentation du compresseur de cette boucle.

La température Tc de la partie du flux d'air qui circule dans la branche d'air chaud 6 peut être déduite d'un capteur de température implanté dans cette branche 6. En variante, elle peut être déduite du débit de fluide d'échange thermique qui circule dans le radiateur de chauffage 7, en particulier du réglage de sa vanne d'alimentation, ou encore du courant électrique d'alimentation des résistances d'un radiateur de chauffage additionnel, le cas échéant.

A partir des températures de l'air en sortie de la source froide (évaporateur 3), de la source chaude (branche d'air chaud 6) et de la position du volet de mixage 11, on a finalement accès à la température de l'air dans la chambre de mixage 10.

La chambre de mixage 10 se sépare, elle-même, en une pluralité de conduits d'alimentation de l'habitacle du véhicule automobile. Dans l'exemple décrit, le conduit 9A, obturable par un volet de distribution 8A, permet une aération du pare-brise du véhicule. Le conduit 9B, obturable par un volet de distribution 8B, permet une aération du buste des passagers. Un conduit 9C, obturable par un volet de distribution 8C, permet une aération d'une région basse de l'habitacle, en pratique des pieds des passagers.

Les volets de distribution 8A, 8B et 8C se déplacent chacun d'une position d'ouverture de leur conduit respectif à une position de fermeture. Leur position est généralement commandée par au moins un moteur électrique, dont l'alimentation permet de déduire les positions respectives de ces volets.

Le dispositif selon l'invention comprend un module de calcul CAL, comprenant plusieurs entrées, par lesquelles il reçoit :

- une consigne C's émanant d'un passager dans l'habitacle du véhicule ;

- un signal représentatif d'une vitesse du véhicule automobile Vv ;

- un signal représentatif d'une température Text de l'air à l'extérieur du véhicule ; et

- de préférence, un signal représentatif d'un flux solaire incident sur le véhicule Φs.

Il est prévu, de façon classique, un organe de commande (non représenté) disposé sur une planche de bord de l'habitacle, ou encore sur le tableau de commande, à disposition d'un passager. Ainsi, le passager actionne cet organe de commande et émet la consigne C's, cette consigne correspondant à une configuration aérothermique souhaitée dans l'habitacle et relative à une température et à une vitesse d'air ventilé, souhaitées. Le module de calcul CAL reçoit alors par son entrée cette consigne C's.

L'entrée par laquelle le module de calcul CAL reçoit le signal représentatif de la vitesse du véhicule Vv est préférentiellement reliée à un compteur de vitesse du véhicule, par exemple un compteur qui permet au conducteur de visualiser sur le tableau de bord la vitesse du véhicule. Le module de calcul CAL évalue, en fonction de la vitesse du véhicule Vv, une vitesse de l'air extérieur.

Dans une variante plus élaborée du dispositif selon l'invention, le module de calcul peut recevoir un signal émanant d'un capteur anémomètre. Ainsi, ce signal est représentatif à la fois, d'un vent incident sur le véhicule et de la vitesse du véhicule.

Il est prévu de disposer, de façon classique, un capteur de température Text de l'air à l'extérieur du véhicule. Ce capteur est relié au module de calcul CAL, par l'une des entrées que comporte le dispositif.

Il est prévu dans l'exemple décrit un capteur de flux solaire, réalisé par exemple sous la forme d'une photodiode ou d'un capteur infrarouge, disposé sur la carrosserie du véhicule ou derrière une vitre du véhicule pour évaluer un flux solaire $\Phi_s$ incident sur le véhicule. Ce capteur est relié à une entrée que comporte le dispositif. Cependant, dans une variante selon laquelle les vitres du véhicule sont traitées optiquement pour filtrer les radiations infrarouges d'un flux solaire incident (surfaces athermiques), l'influence du flux solaire $\Phi_S$ peut être négligée dans la régulation qu'effectue le dispositif selon l'invention et un tel capteur de flux solaire peut être supprimé.

A partir de ces paramètres aérothermiques ($V_v$, Text et $\Phi_S$), de la consigne C's et des réglages pré-existants des différents équipements de l'installation, le module de calcul CAL met en forme une consigne de régulation REG et émet cette consigne de régulation à un module de commande COM que comporte le dispositif selon l'invention. En particulier, le module de calcul CAL évalue une température de confort d'un passager de l'habitacle, selon l'invention en fonction des réglages pré-existants des équipements de l'installation, des paramètres aérothermiques précités et éventuellement d'une nouvelle consigne C's. Le module CAL met en forme la consigne de régulation REG, en fonction de cette température de confort, et la transmet au module de commande COM.

Le module COM commande les différents équipements de l'installation, en fonction de la consigne de régulation REG et comporte à cet effet une pluralité de sorties reliées à des actionneurs de réglage des différents équipements de l'installation. Ainsi, en fonction de la consigne de régulation REG, le module COM commande :

- le moteur 1 du pulseur de l'installation (flèche C'v), en vue de contrôler la vitesse Vas de l'air ventilé ;

- le radiateur de chauffage 7 (flèche C'c) de la branche d'air chaud 6, en vue de contrôler la température Tc de la partie du flux d'air qui circule dans la branche d'air chaud 6 ;

- la boucle de climatisation (flèche C'f), en vue d'ajuster la température Tf du flux d'air que refroidit l'évaporateur 3 ;

- le volet de mixage 11 (flèche C't), en vue d'ajuster la température Tas de l'air ventilé ; et

- les différents volets de distribution 8a, 8b et 8c (flèche C'd), en vue de contrôler la distribution du flux d'air délivré dans l'habitacle.

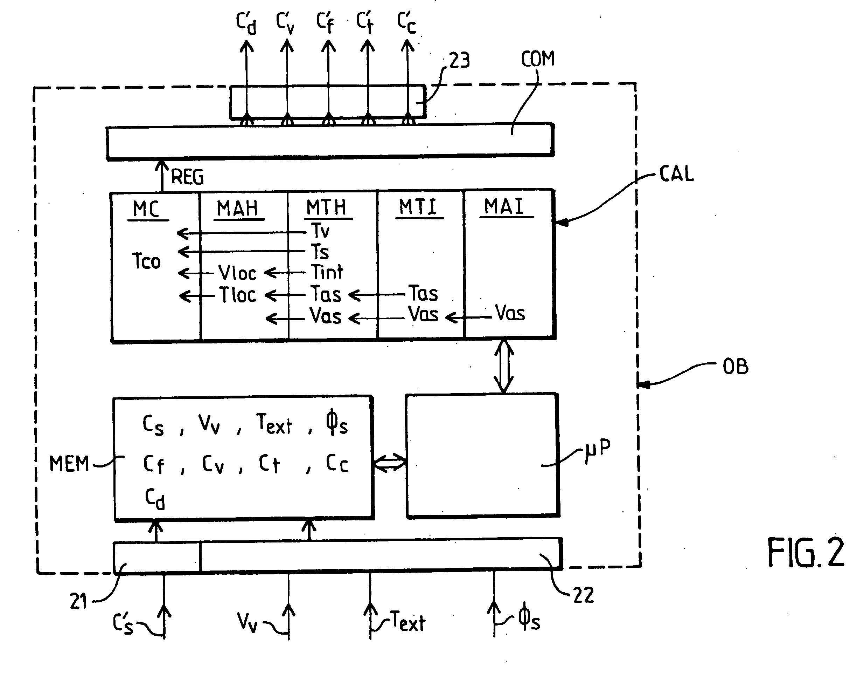

Le dispositif comprend une mémoire MEM (figure 2) pour stocker les consignes pré-existantes de commandes des différents équipements de l'installation.

Dans une variante, le dispositif ne comprend pas nécessairement de mémoire MEM. Il est muni alors d'au moins un capteur, par exemple un capteur infrarouge, relié au module de commande COM, tandis que le module de calcul CAL évalue dynamiquement une température de confort Tco en fonction des grandeurs mesurées. En pratique, il peut être prévu un capteur de la température intérieure et/ou un capteur dirigé vers la tête du passager (conducteur ou autre). Cette variante présente l'avantage d'améliorer la qualité de la régulation en considérant des conditions réelles dans l'habitacle. En revanche, le nombre de ces capteurs grève le coût de l'installation.

Les consignes Cc, Cf et Ct permettent de déduire la température Tas de l'air destiné à être ventilé dans l'habitacle (température de l'air en sortie immédiate des conduits 9A, 9B et 9C). La consigne Cv permet de déduire la vitesse Vas de l'air destiné à être ventilé. Enfin, la consigne Cd permet de déduire la distribution de ce flux d'air dans l'habitacle, en particulier dans au moins une région prédéterminée de l'habitacle.

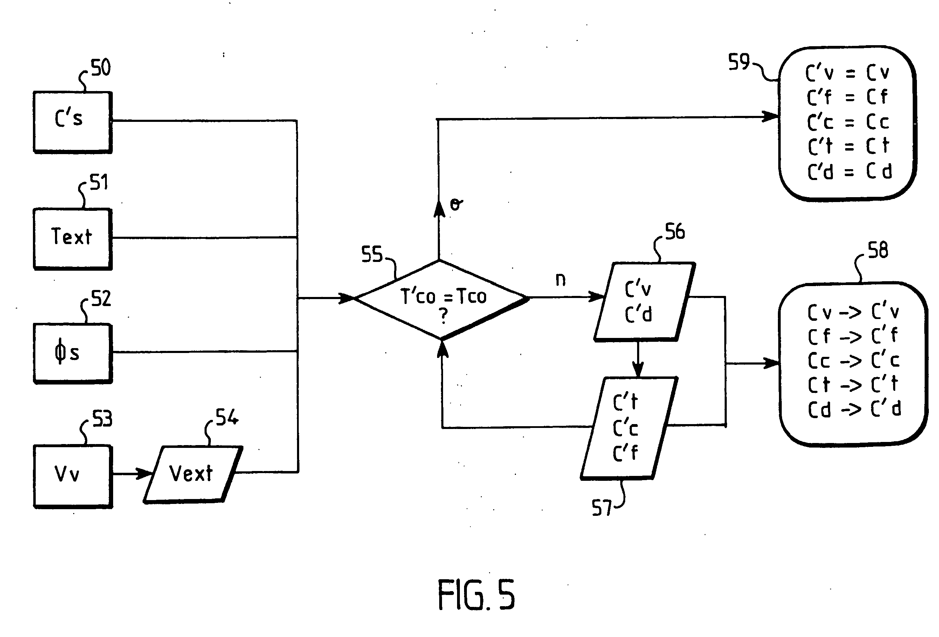

En se référant à la figure 5, le module de calcul reçoit les nouvelles valeurs C's, Vv, Text et $\Phi_S$, évalue, selon une seconde forme de réalisation, la température de confort du passager en fonction de ses nouvelles valeurs et compare cette nouvelle température de confort à une température de confort préalablement stockée en mémoire du dispositif. Si cette différence est supérieure (en valeur absolue) à une valeur seuil prédéterminée, le module de calcul émet une consigne de régulation au module de commande COM, lequel met en forme, en fonction de cette consigne de régulation, des nouvelles consignes de commande des différents équipements de l'installation, en vue d'obtenir la température de confort nouvellement estimée et qui correspond à la configuration aérothermique souhaitée par le passager.

Ainsi, la mémoire MEM coopère avec le module de calcul CAL pour stocker la température de confort évaluée, de sorte que le module de calcul estime systématiquement une variation entre une température de confort nouvellement évaluée et une température de confort mémorisée.

Dans la variante précitée (sans la mémoire MEM), une température de confort courante est mesurée dynamiquement, ou calculée dynamiquement en fonction des dernières mesures effectuées.

Le module de commande COM ajuste ou non le fonctionnement de l'un au moins des équipements en fonction de la variation estimée de la température de confort Tco (ou de la température de confort courante), en vue de maintenir une configuration aérothermique souhaitée dans l'habitacle, correspondant toujours à la nouvelle consigne reçue C's.

Dans l'exemple décrit, le véhicule automobile est équipé d'un ordinateur de bord OB (figure 2) muni de la mémoire MEM et d'un microprocesseur $\mu P$, propre à coopérer avec cette mémoire MEM. Dans l'exemple représenté sur la figure 2, l'ordinateur de bord OB comprend une première interface d'entrée 21 qui reçoit la consigne C's relative à la configuration aérothermique souhaitée par le passager de l'habitacle, ainsi qu'une seconde interface d'entrée 22 reliée à des capteurs de la vitesse du véhicule Vv, de la température d'air extérieur Text et du rayonnement solaire $\Phi_S$. En pratique, l'ordinateur de bord OB comprend une mémoire non volatile (mémoire ROM), dans laquelle est enregistrée un programme informatique. Le microprocesseur $\mu P$ peut coopérer avec cette mémoire non volatile pour exécuter un traitement des données mémorisées dans la mémoire MEM, en vue d'estimer une température de confort Tco qui correspond à la consigne Cs nouvellement enregistrée.

Un tel programme informatique enregistré dans la mémoire non volatile, coopérant avec le microprocesseur, est à considérer comme un moyen important pour la mise en oeuvre de la présente invention. A ce titre, la présente invention vise aussi un programme informatique enregistré sur un support différent d'une mémoire non volatile d'un ordinateur de bord, ce support pouvant être réalisé sous la forme d'une disquette, d'un CD-Rom, ou encore tout autre support de ce type. Un tel programme informatique comprend une succession d'instructions qui permet d'évaluer une température de confort en fonction des paramètres stockés dans la mémoire MEM. Un tel programme informatique est ensuite destiné à être enregistré dans une mémoire non volatile notamment d'un ordinateur de bord de véhicule automobile du type précité.

Dans l'exemple représenté sur la figure 2, le module de calcule CAL se présente donc sous la forme d'une suite d'instructions mémorisées dans une mémoire non volatile, propre à coopérer avec le microprocesseur $\mu P$ de l'ordinateur de bord OB. Par extension, le module de calcul CAL désigne ci-après le programme informatique même, permettant le calcul de la température de confort.

Le module de calcul CAL se subdivise en une pluralité de modules successifs MAI, MTI, MTH, MAH et MC, dans lesquels sont respectivement évaluées :

- une vitesse d'air destiné à être soufflé dans l'habitacle Vas ;

- une température de l'air destiné à être soufflé dans l'habitacle Tas ;

- une température Tv des vitres du véhicule, une température Ts de la structure du véhicule et une température Tint moyenne dans l'habitacle ;

- une température Tloc et une vitesse Vloc de l'air ventilé dans une région prédéterminée de l'habitacle, en particulier à proximité du buste du conducteur du véhicule (comprenant la tête et une partie supérieure du torse), dans l'exemple décrit ; et

- la température de confort Tco correspondant à la configuration aérothermique souhaitée par le conducteur du véhicule dans cette région prédéterminée (à proximité de son buste).

Le module de commande COM (se présentant, le cas échéant, sous la forme d'un programme informatique enregistré dans une mémoire non volatile du type précité et complémentaire du programme permettant le calcul de la température de confort) coopère avec le module de calcul pour recevoir la consigne de régulation REG mise en forme en fonction de l'évaluation de la température de confort Tco. Le module COM met en forme, le cas échéant, de nouvelles consignes de commande C'd, C'v, C'f, C't et C'c des différents équipements de l'installation, en fonction de la consigne de régulation REG et les émet par une interface de sortie 23 que comporte l'ordinateur de bord OB.

Dans une forme de réalisation préférée de la présente invention, le module de calcul du dispositif est agencé pour évaluer la température de confort Tco (ou température équivalente) comme suit.

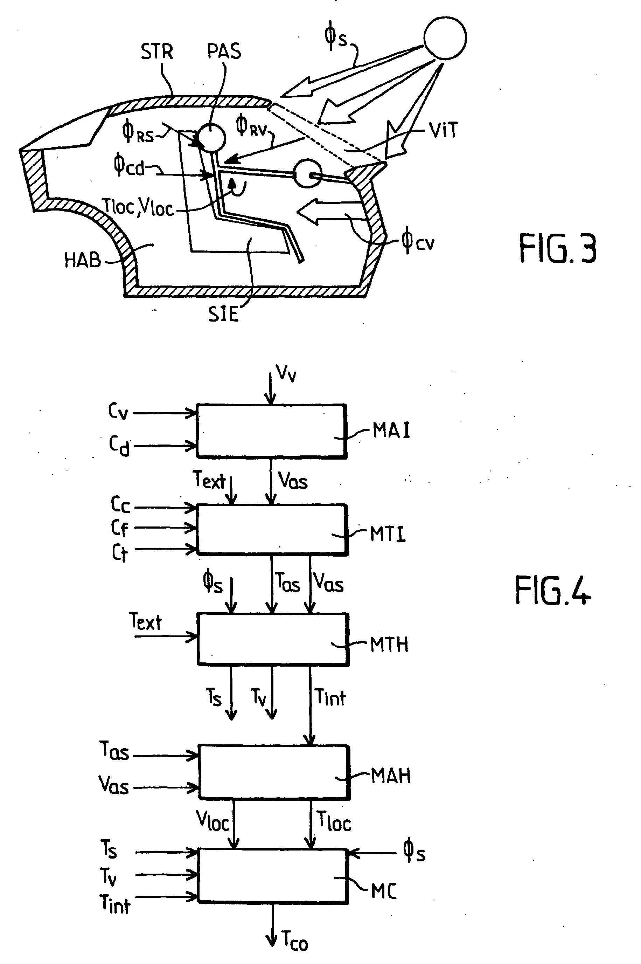

En se référant à la figure 3, un passager dans l'habitacle du véhicule reçoit de la chaleur par convexion, par rayonnement et, le cas échéant, par conduction. Généralement, la chaleur que reçoit le passager par conduction émane du siège SIE de ce passager. Dans l'exemple décrit, il est considéré que la température du siège est voisine de celle du passager et que le flux de chaleur par conduction $\Phi_{cd}$ peut être négligé.

Le passager PAS reçoit en outre de la chaleur par rayonnement $\Phi_{RS}$, issue de la structure STR du véhicule (par exemple du toit de l'habitacle HAB et/ou de la planche de bord du véhicule). Par rayonnement, le passager PAS reçoit en outre de la chaleur $\Phi_{RV}$, émanant des vitres VIT du véhicule. Typiquement, ces chaleurs par rayonnement peuvent être induites notamment par un flux solaire $\Phi_S$ incident sur le véhicule, en particulier sur ses vitres VIT et sur sa structure STR.

Le passager PAS du véhicule reçoit enfin de la chaleur $\Phi_{CV}$ par convection, cette chaleur étant principalement due à un flux d'air circulant dans l'habitacle HAB. En particulier, ce flux d'air, à proximité du buste du conducteur PAS a une vitesse Vloc et une température Tloc.

En définitive, la chaleur que reçoit le passager PAS, en négligeant la chaleur par conduction du siège SIE, est donnée par :

$$\Phi_1 = \Phi_{RS} + \Phi_{RV} + \Phi_{CV} + t\Phi_S \qquad (1)$$

où t représente un coefficient de transmission par les vitres du flux solaire rayonné dans l'habitacle HAB du véhicule.

La chaleur cédée par rayonnement de la structure s'écrit :

$$\Phi_{RS} = Kst\ (Tint^4 - Ts^4) \qquad (2)$$

où Ts représente la température de la structure STR du véhicule et Kst représente une constante qui peut être déduite des propriétés physiques (notamment thermodynamiques) de la zone du véhicule considérée et de la surface.

De la même manière, la chaleur cédée par rayonnement des vitres est donnée par :

$$\Phi_{RV} = Kv\ (Tint^4 - Tv^4) \qquad (3)$$

où Tv est la température des vitres et Kv est une constante qui peut être déduite des propriétés physiques (notamment thermodynamiques) des vitres et de la surface de la zone considérée.

Les températures Ts et Tv peuvent être mesurées par des capteurs disposés sur la carrosserie du véhicule, le cas échéant et sur au moins une vitre du véhicule. Dans l'exemple décrit, elles sont avantageusement déduites de la température extérieure Text et de la chaleur par rayonnement solaire $\Phi_S$, selon un modèle thermique choisi de l'habitacle du véhicule.

Enfin, la chaleur cédée par convection est donnée par :

$$\Phi_{CV} = k\ (Tint - Tloc) \qquad (4)$$

où k est un coefficient de convection qui dépend notamment de la vitesse d'air ventilé Vloc dans une région prédéterminée de l'habitacle, dans laquelle les échanges des différentes chaleurs sont considérés.

Typiquement, le coefficient de convection k est donné par :

$$k = a\ (Vloc)^{1/2} + b\ |Tloc - tint|^{1/4} \qquad (5)$$

où a et b sont des coefficients pouvant être déduits des propriétés physiques des aérateurs dans l'habitacle et de la distance séparant la région prédéterminée précitée de ces aérateurs.

Ainsi, pour des géométries respectives connues des aérateurs et pour une région visée dans l'habitacle du véhicule, les coefficients a et b sont connus.

La température Tint représente ici la température moyenne de l'air à l'intérieur de l'habitacle. Dans l'exemple décrit, la région de l'habitacle dans laquelle sont considérés localement les échanges thermiques est celle dans laquelle baigne la tête la conducteur. Comme la peau de la tête du conducteur est nue, elle rentre directement en contact avec l'air ambiant et la température moyenne à considérer est Tint. En revanche, s'il est souhaité d'estimer une température de confort dans une région localisée à proximité d'une partie habillée du passager PAS, une température d'habillement de cette partie du passager est prise en compte. Ainsi, dans les formules données ci-dessus, la température Tint devient une température d'habillement qui peut être déduite de la température Tint et des propriétés physiques des habits dont le passager est revêtu dans cette région localisée. Par exemple, pour considérer une aération dans une région à proximité des pieds du passager, il pourra être tenu compte des propriétés thermiques de vêtements tels que des chaussettes et des chaussures.

La température Tint moyenne dans l'habitacle est estimée ici selon un modèle thermique de l'habitacle, décrit dans la demande de brevet français publiée FR-2779097 de la Demanderesse. En particulier, elle est déduite de la température extérieure Text et, le cas échéant, du flux solaire mesuré $\Phi_S$. En variante, elle peut être mesurée par un capteur de température intérieure. Cependant, un tel capteur doit mesurer une température moyenne et doit généralement être ventilé pendant les mesures de température qu'il effectue.

La température des vitres Tv et de la structure Ts est également déduite d'un modèle thermique de l'habitacle de ce type.

La vitesse Vloc et la température Tloc de l'air ventilé dans la région prédéterminée de l'habitacle est déduite de la température Tas et de la vitesse Vas de l'air en sortie immédiate des aérateurs de l'habitacle, selon un modèle aéraulique choisi de l'habitacle. Un tel modèle est décrit de façon détaillée dans la même demande de brevet français FR-2779097 de la Demanderesse.

A ce titre, la description détaillée de cette demande FR-2779097 est à considérer comme faisant partie intégrante du contenu de la description de la présente demande.

Il est à noter en outre que la température Tas et la vitesse Vas de l'air en sortie immédiate des bouches d'aération peut être déduite des propriétés physiques de l'installation et des conduits qu'elle comporte, ainsi que des réglages respectifs de ses différents équipements.

Pour évaluer la température de confort Tco dans la région prédéterminée de l'habitacle, on estime que la chaleur que reçoit le passager par convection, par rayonnement et, le cas échéant, par conduction est sensiblement égale à une chaleur reçue par convection naturelle, dans un milieu dans lequel la vitesse forcée de l'air est négligeable. Il s'agit, bien entendu, d'un milieu virtuel dans lequel serait plongé le passager et dont la température correspond à la température intérieure moyenne dans l'habitacle Tint. Dans un tel milieu, la vitesse de l'air ne serait créée que par la convection naturelle. Cette chaleur cédée par convection naturelle est donnée par la relation :

$$\Phi_2 = \text{Kco (Tco - Tint)} \tag{6}$$

où Kco correspond à une constante qui dépend notamment d'un coefficient de convection dans ce milieu virtuel, dans lequel la vitesse de l'air forcée est nulle, ainsi que de la surface de la région examinée. Cette constante est donnée par les formules usuelles de la convection naturelle.

Une estimation de la température de confort Tco est alors obtenue en posant l'équation :

$$\Phi_1 - \Phi_2 = 0 \tag{7}$$

En pratique, le module MAI (figure 4) reçoit une valeur représentative de la vitesse du véhicule Vv. Il en est déduit une vitesse d'air extérieur. Le module MAI reçoit en outre les commandes correspondant aux réglages existants du moteur du pulseur 1 et de la position des volets de distribution 8a, 8b et 8c. Les deux consignes de commande Cv et Cd sont donc représentatives de la vitesse de l'air que délivre l'installation. En particulier, à partir d'un modèle aéraulique de l'installation, le module de calcul du dispositif selon l'invention évalue une vitesse Vas d'air ventilé, à proximité immédiate d'une bouche d'aération de l'habitacle.

En amont de l'évaporateur 3, l'installation reçoit de l'air extérieur, de température Text. En parcourant l'évaporateur, le radiateur de chauffage 7 et, le cas échéant, un radiateur de chauffage additionnel, sa température est modifiée. Le module MTI évalue alors, selon un modèle thermique de l'installation, une température Tas d'air ventilé à proximité immédiate de la bouche d'aération précitée, en fonction de la température extérieure Text, de la vitesse Vas (en pratique du débit) de l'air ventilé par l'installation et des consignes de commande en température des différents équipements de l'installation. A partir de la consigne de commande Cf de la source froide (évaporateur 3), de la consigne de commande Cc de la source chaude (radiateur de chauffage 7) et de la consigne de commande Ct du mixage (position du volet de mixage 11), on déduit une capacité calorifique de l'installation. Le module MTI, en fonction de cette capacité calorifique, de la température extérieure Text et de la vitesse d'air soufflé Vas estime donc la température d'air soufflé Tas, selon le modèle thermique choisi de l'installation. Dans ce modèle, intervient bien entendu certaines propriétés physiques (notamment thermodynamiques) de l'installation (géométrie des conduits, compacité, etc).

Le module MTH évalue, selon un modèle thermique choisi de l'habitacle, une température intérieure moyenne Tint et les températures de structure Ts et de vitres Tv. Dans le mode de réalisation selon lequel il est prévu un capteur de flux solaire, le module MTH utilise les valeurs mesurées du flux solaire Φs. Il utilise en outre les valeurs mesurées de la température extérieure Text, ainsi que les valeurs estimées de la température Tas et de la vitesse Vas de l'air ventilé par l'installation.

Le module MAH utilise les valeurs estimées de la température intérieure moyenne Tint, de la température Tas de l'air ventilé et de sa vitesse Vas, pour évaluer la vitesse Vloc et la température Tloc de l'air dans la région prédéterminée de l'habitacle, selon un modèle aéraulique choisi de l'habitacle, du type décrit dans la demande FR-2779097.

Le module MC reçoit la température de structure Ts, la température des vitres Tv, la température intérieure moyenne Tint, la température Tloc et la vitesse Vloc de l'air dans la région prédéterminée et évalue, à partir des formules ci-avant, une température de confort Tco dans la région prédéterminée.

Dans la réalisation préférée représentée sur la figure 5, on vérifie, pour toute variation d'un paramètre quelconque détecté, si la température de confort calculée est modifiée. Dans un premier temps, on procède aux acquisitions d'une éventuelle nouvelle consigne C's (en 50) et des paramètres aérothermiques choisis pour la régulation, tels que la température extérieure Text (en 51), le flux solaire Fs (en 52) et la vitesse du véhicule Vv (en 53) dont la vitesse d'air extérieure Vext peut être déduite (en 54). On évalue ensuite la température de confort Tco et un test 55 est effectué sur cette température de confort calculée.

Si la température de confort qui correspond à la consigne C's reste sensiblement la même que celle précédemment calculée, les différentes consignes de commande Cv, Cf, Cc, Ct et Cd restent inchangées (encadré 59).

En revanche, si la valeur de la température de confort dernièrement calculée est différente de celle précédemment mémorisée (test 55), de nouvelles consignes de commande C'v et C'd sont évaluées (en 56). L'application effective de ces nouvelles consignes C'v et C'd et/ou la variation de la température de confort détectée en 55 nécessite éventuellement l'évaluation de nouvelle consignes de commande C't, C'c et C'f (en 57). Lorsque la température de confort anciennement mémorisée est retrouvée avec de nouvelles consignes de commande C'v, C'd, C't, C'c et C'f (boucle sur le test 55), ces consignes de commandes sont mises en forme et appliquées aux équipements de l'installation. Dans l'encadré 58, les anciennes consignes Cv, Cd, Ct, Cc et Cf sont donc remplacées par les consignes nouvellement calculées C'v, C'd, C't, C'c et C'f pour conserver la même température de confort.

Il est prévu en pratique un test (non représenté sur la figure 5) sur la consigne du passager C's. Ce test est par exemple effectué après acquisition de la consigne C's en 50. En effet, si la consigne C's nouvellement acquise est différente de la dernière consigne Cs mémorisée, alors la consigne acquise C's est stockée en mémoire MEM à la place de l'ancienne consigne Cs et le module de calcul évalue la température de confort en tenant compte de la nouvelle consigne C's.

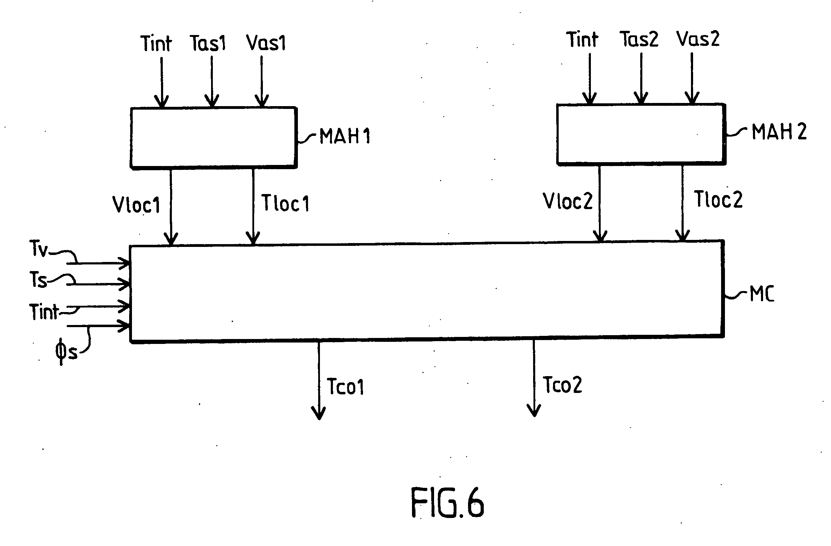

On se réfère maintenant à la figure 6 pour décrire un dispositif selon l'invention, dans une forme de réalisation plus élaborée, avec une régulation de la température de confort en deux régions localisées dans l'habitacle. Le module de calcul comprend alors deux modules MAH1 et MAH2 qui reçoivent des températures Tas1 et Tas2 et des vitesses Vas1 et Vas2, respectives, qui dépendent, dans l'exemple, de l'installation de la figure 1, de la consigne de distribution Cd. Les modules MAH1 et MAH2 sont capables d'évaluer, indépendamment, une température Tloc1 et une vitesse Vloc1 dans une première région de l'habitacle (par exemple à proximité de la tête du conducteur) et une température Tloc2 et une vitesse Vloc2 dans une seconde région de l'habitacle (par exemple à proximité des pieds du conducteur), respectivement. A partir de ces valeurs de température et de vitesse, ainsi que des paramètres aérothermiques estimés Tv, Ts, Tint et mesurés Φ$_S$, le module MC évalue les deux températures de confort Tco1 et Tco2 dans la première région et dans la seconde région, respectivement. Si la première région est considérée comme étant à proximité de la tête du conducteur, l'estimation de la température de confort Tco1 est basée sur la température intérieure Tint, directement. En revanche, si la seconde région est considérée comme étant proche des pieds du conducteur, le calcul de la température de confort Tco2 peut être avantageusement basé sur une température d'habillement, par exemple proportionnelle à la température intérieure Tint.

Si l'une des températures de confort Tco1 varie, tandis que l'autre température de confort Tco2 reste sensiblement constante, il peut être prévu notamment une nouvelle consigne de commande C'd des positions respectives des volets de distribution 8a, 8b et 8c.

Il est à noter qu'il peut être prévu, en outre, une régulation pour deux zones distinctes de l'habitacle, par exemple une zone avant et une zone arrière ou une zone gauche et une zone droite. Dans cette forme de réalisation, le dispositif reçoit deux consignes des passagers C's1 et C's2 relatives à des configurations aérothermiques souhaitées dans deux régions respectives de l'habitacle. Dans l'installation, il est prévu des conduits de distribution d'air dans ces deux zones. Préférentiellement, il peut être prévu en outre une source chaude additionnelle et éventuellement un pulseur, individuels pour chaque zone, avec ou non au moins un volet de mixage. Le module MC tient toujours compte des températures Tloc1,Tloc2 et des vitesses Vloc1,Vloc2 locales de l'air dans chacune des deux zones pour évaluer chaque température de confort dans la zone correspondante.

Ainsi, une régulation du fonctionnement des différents équipements de l'installation, basée sur l'estimation d'une variation de la température de confort, permet, selon l'un des avantages majeurs que procure la présente invention, de tenir compte directement du ressenti thermique des passagers. Selon un autre avantage que procure la présente invention, l'estimation d'une telle température de confort dans des régions localisées de l'habitacle permet de tenir compte de l'habillement des passagers suivant les différentes régions considérées, ou encore suivant les différentes configurations aérothermiques souhaitées par les passagers de l'habitacle, en particulier si l'installation permet une distribution d'air dans différentes zones de l'habitacle dans chacune desquelles est situé un passager.

Bien entendu, la présente invention ne se limite pas à la forme de réalisation décrite ci-avant à titre d'exemple. Elle s'étend à d'autres variantes.

Ainsi, on comprendra que, dans une variante simplifiée, le radiateur de chauffage additionnel précité et/ou la boucle de climatisation décrite ci-avant, peuvent être supprimées. Cependant, un tel radiateur de chauffage additionnel est généralement utilisé pour des températures extérieures basses, typiquement lorsque le radiateur 7 est insuffisant. La consigne de commande Cc est alors ajustée, dans une telle occurrence, en fonction de la température de confort estimé. La consigne de commande Ct peut rester, au moins dans un premier temps, constante et correspondre à une position du volet de mixage 11 dans laquelle il ferme la branche d'air froid 5. A l'inverse, pour des températures extérieures élevées, la consigne de commande Cf peut être ajustée pour régler le fonctionnement de la boucle de climatisation, tandis que la consigne de commande Ct reste sensiblement constante et correspond à une position du volet de mixage 11 dans laquelle il ferme la branche d'air chaud 6.

Le fonctionnement de la boucle de climatisation peut être encore utilisé pour diminuer le taux d'humidité de l'air dans l'habitacle, par exemple pour empêcher la formation de buée sur les vitres du véhicule. La vapeur d'eau présente dans l'air qui traverse l'évaporateur se condense et peut s'évacuer ainsi en dehors de l'habitacle. Dans ce cas, le module COM pilote à la fois la boucle de climatisation, le volet de mixage et, le cas échéant, le radiateur de chauffage additionnel. Il peut alors être prévu en outre une entrée supplémentaire dans le dispositif selon l'invention, cette entrée recevant un signal relatif à une information représentative d'un degré d'humidité dans l'habitacle. Le module de commande met en forme des consignes de commande C'f, C't et éventuellement C'c pour ajuster, à la fois, la température d'air ventilé Tas et maintenir un degré d'humidité dans l'habitacle inférieur à une valeur seuil.

Il peut être prévu en outre, notamment dans le modèle thermique de l'habitacle décrit ci-avant, de tenir compte d'une activité de métabolisme des passagers présents dans le véhicule. Par exemple en fonction du nombre de portes ouvertes au démarrage du véhicule, ou encore à partir d'informations délivrées par des capteurs de présence montés sur les sièges du véhicule, il peut être déduit un dégagement de chaleur moyen, par métabolisme des passagers, en vue de perfectionner l'estimation de la température intérieure moyenne dans l'habitacle.

La prise en compte du rayonnement solaire pour l'estimation de la température de confort et/ou dans le modèle thermique de l'habitacle décrits ci-avant, bien qu'avantageuse, peut, dans une variante simplifiée, être supprimée. Dans cette variante, le dispositif selon l'invention n'est plus relié qu'à deux capteurs, au moins, dont un capteur de température extérieure et un capteur de vitesse (compteur de vitesse).

Dans une variante de réalisation du dispositif décrit ci-avant, il peut être prévu une horloge capable de coopérer avec les entrées du dispositif, ainsi qu'avec la mémoire MEM, en vue de comparer la consigne Cs et les paramètres Vv, Text et $\Phi$s enregistrés avec de nouvelles valeurs reçues C's, Vv, Text et $\Phi$s. En effet, dans la mémoire du dispositif, peuvent être stockées la consigne émanant du passager Cs, des valeurs représentatives des paramètres aérothermiques tels que la vitesse du véhicule Vv, la température extérieure Text et le flux solaire $\Phi_S$. Ainsi, après une durée prédéterminée (par exemple de deux minutes), le module de calcul compare les nouvelles valeurs reçues en entrée aux valeurs Cs, Vv, Text et $\Phi_S$ stockées en mémoire.

**Revendications**

1. Dispositif de commande d'une installation de ventilation, chauffage et/ou climatisation de l'habitacle d'un véhicule automobile, du type comprenant

   - au moins une entrée (22), pour recevoir au moins un signal représentatif d'une information relative à un paramètre aérothermique choisi (Text, Vv, Fs),
   - une sortie (23) reliée à au moins un actionneur de réglage d'un équipement de l'installation (1,3,11,7,8A,8B, 8C), et
   - un module de commande (COM) connecté à ladite sortie et capable de piloter l'actionneur de réglage en vue de modifier le fonctionnement de l'équipement,

   **caractérisé en ce que** ladite entrée (22) est propre à recevoir des signaux respectifs représentatifs d'une température (Tloc) et d'une vitesse (Vloc) d'air locales dans une région prédéterminée de l'habitacle, et **en ce qu'**il comporte un module de calcul (CAL) apte à évaluer au moins une température de confort (Tco) d'un passager (PAS) situé dans ladite région prédéterminée de l'habitacle, sur la base dudit paramètre aérothermique, desdits signaux (Tloc, Vloc), et de modèles choisis, tandis que le module de commande (COM) est agencé pour coopérer avec le module de calcul (CAL) en vue de modifier ou non le fonctionnement de l'équipement en fonction de cette évaluation de la température de confort (Tco) qui correspond à une configuration aérothermique souhaitée dans ladite région de l'habitacle.

2. Dispositif selon la revendication 1, **caractérisé en ce que** ladite entrée est propre à recevoir au moins une information représentative d'une température intérieure moyenne dans l'habitacle (Tint), et **en ce que** le module de calcul est agencé pour estimer ladite température de confort en fonction de la température intérieure (Tint).

3. Dispositif selon l'une des revendications précédentes, **caractérisé en ce que** l'entrée est propre à recevoir des signaux respectifs représentatifs d'une température (Tas) et d'une vitesse (Vas) de l'air que ventile l'installation.

4. Dispositif selon la revendication 3, **caractérisé en ce que** le module de calcul est agencé pour estimer lesdites température (Tloc) et vitesse (Vloc) d'air locales, selon un modèle aéraulique choisi de l'habitacle, faisant intervenir la température (Tas) et la vitesse (Vas) de l'air ventilé.

5. Dispositif selon la revendication 4, prise en combinaison avec la revendication 2, **caractérisé en ce que** le module de calcul est agencé pour tenir compte en outre de ladite température intérieure (Tint) dans le modèle aéraulique de l'habitacle, en vue d'estimer lesdites température (Tloc) et vitesse (Vloc) d'air locales.

6. Dispositif selon la revendication 3, **caractérisé en ce que** le module de calcul est agencé pour évaluer, selon un modèle thermique choisi de l'habitacle, la température intérieure moyenne dans l'habitacle (Tint) en fonction de la température (Tas) et de la vitesse (Vas) de l'air ventilé.

7. Dispositif selon la revendication 6, **caractérisé en ce que** l'entrée est propre à recevoir en outre un signal représentatif d'une température d'air extérieur (Text), et **en ce que** le module de calcul est agencé pour tenir compte de la température d'air extérieur (Text) dans le modèle thermique de l'habitacle, en vue d'estimer ladite température intérieure (Tint).

8. Dispositif selon l'une des revendications 6 et 7, **caractérisé en ce que** l'entrée est propre à recevoir en outre un signal représentatif d'un flux solaire (Fs) incident sur le véhicule, et **en ce que** le module de calcul est agencé pour tenir compte en outre du flux solaire (Fs) dans le modèle thermique de l'habitacle, en vue d'évaluer la température intérieure (Tint).

9. Dispositif selon l'une des revendications précédentes, **caractérisé en ce que** l'entrée est propre à recevoir en outre un signal représentatif de la température d'une vitre (Tv) au moins et/ou de la structure (Ts) du véhicule, et **en ce que** le module de calcul est agencé pour évaluer la température de confort (Tco) en fonction desdites températures de vitre (Tv) et/ou de structure (Ts).

10. Dispositif selon la revendication 9, **caractérisé en ce que** le module de calcul est agencé pour évaluer les températures de vitre (Tv) et/ou de structure (Ts) en fonction de la température (Tas) et de la vitesse (Vas) d'air ventilé, préférentiellement en tenant compte en outre de la température extérieure (Text) et/ou du flux solaire.

11. Dispositif selon l'une des revendications 3 à 10, **caractérisé en ce que** l'entrée est propre à recevoir des signaux respectivement représentatifs d'une vitesse d'air (Vv) à l'extérieur de l'habitacle, d'un régime (Cv) d'un pulseur (1) de l'installation, propre à délivrer un flux d'air (F), et d'au moins une position (Cd) d'un volet de distribution (8A, 8B, 8C) du flux d'air dans l'habitacle, et **en ce que** le module de calcul est agencé pour évaluer la vitesse d'air ventilé (Vas), en fonction de la vitesse d'air extérieur, du régime du pulseur et de la position du volet de distribution.

12. Dispositif selon la revendication 11, **caractérisé en ce que** l'entrée est propre à recevoir une information relative à la vitesse du véhicule, tandis que le module de calcul est agencé pour estimer la vitesse d'air extérieur en fonction de la vitesse du véhicule (Vv).

13. Dispositif selon l'une des revendications 3, 11 et 12, **caractérisé en ce que** l'entrée est propre à recevoir des signaux représentatifs d'une température d'air chaud (Tc) que délivre une source d'air chaud de l'installation, notamment un radiateur de chauffage (7), et d'une température d'air extérieur (Text), et **en ce que** le module de calcul est agencé pour évaluer une température d'air ventilé (Tas) en fonction de la vitesse d'air ventilé (Vas) et desdites températures d'air chaud (Tc) et d'air extérieur (Text).

14. Dispositif selon la revendication 13, **caractérisé en ce que**, la source d'air chaud comprenant un radiateur parcouru par un fluide d'échange thermique, l'entrée est propre à recevoir un signal (Cc) représentatif de la température dudit fluide dans le radiateur (7) tandis que le module de calcul est agencé pour évaluer une température d'air chaud (Tc) en fonction du débit du fluide.

15. Dispositif selon l'une des revendications 13 et 14, **caractérisé en ce que**, l'installation comportant un volet de mixage (11) de position réglable pour ajuster la température d'air ventilé (Tas), l'entrée est propre à recevoir en outre un signal (Ct) représentatif de la position du volet de mixage, tandis que le module de calcul est agencé pour évaluer la température de l'air ventilé (Tas) en fonction de la position du volet de mixage.

16. Dispositif selon l'une des revendications 13 à 15, **caractérisé en ce que**, l'installation comportant en outre une source d'air froid (3), l'entrée est propre a recevoir en outre un signal (Cf) représentatif d'une température d'air émanant de ladite source d'air froid, tandis que le module de calcul est agencé pour tenir compte en outre de la température d'air froid (Tf) pour évaluer la température d'air ventilé (Tas).

17. Dispositif selon la revendication 7, **caractérisé en ce que**, l'installation comportant en outre une boucle de climatisation parcourue par un fluide frigorigène de pression variable et permettant d'ajuster la température d'air froid, l'entrée est propre à recevoir un signal (Cf) représentatif de la pression dudit fluide frigorigène.

18. Dispositif selon l'une des revendications précédentes, **caractérisé en ce que** ladite entrée est agencée pour recevoir un signal (Text) émanant d'un capteur de température à l'extérieur de l'habitacle.

19. Dispositif selon l'une des revendications précédentes, **caractérisé en ce que** l'entrée est agencée pour recevoir un signal (Vv) émanant d'un capteur de vitesse du véhicule.

20. Dispositif selon l'une des revendications précédentes, **caractérisé en ce que** l'entrée est agencée pour recevoir un signal (Fs) émanant d'un capteur de flux solaire, incident sur le véhicule.

21. Dispositif selon l'une des revendications précédentes, **caractérisé en ce qu'**il comporte :

- une première entrée (21), propre à recevoir une consigne (C's) relative à une configuration aérothermique souhaitée dans l'habitacle, et
- une seconde entrée (22), pour recevoir au moins ledit signal représentatif d'une information relative au paramètre aérothermique choisi (Text,Vv,Fs),

tandis que le module de calcul (CAL) est apte à évaluer la température de confort (Tco) à partir dudit paramètre aérothermique et en tenant compte de ladite consigne (Cs).

22. Dispositif selon la revendication 21, **caractérisé en ce qu'**il comporte une mémoire (MEM) pour stocker ladite consigne (Cs), et **en ce que** la seconde entrée (22) est reliée à ladite mémoire (MEM) pour stocker en outre une valeur représentative dudit paramètre aérothermique, tandis que le module de calcul (CAL) est propre à coopérer avec la mémoire (MEM) pour évaluer ladite température de confort (Tco).

23. Dispositif selon la revendication 22, **caractérisé en ce que** le module de calcul (CAL) est apte à coopérer avec la mémoire (MEM) et la seconde entrée pour estimer une variation du paramètre aérothermique (Vv, Text, Fs) et/ou de la consigne (Cs), tandis que le module de commande (COM) est agencé pour ajuster ou non le fonctionnement de l'équipement en fonction d'au moins une variation estimée du paramètre aérothermique et/ou de la consigne, en vue de maintenir une température de confort (Tco) qui correspond à la configuration aérothermique souhaitée dans l'habitacle.

24. Dispositif selon la revendication 22, **caractérisé en ce que** la mémoire (MEM) est apte à coopérer avec le module de calcul (CAL) pour stocker la température de confort évaluée, et **en ce que** le module de calcul est agencé pour estimer une variation entre une température de confort évaluée et une température de confort mémorisée, tandis que le module de commande (COM) est agencé pour ajuster ou non le fonctionnement de l'équipement en fonction de la variation estimée de la température de confort (Tco), en vue de maintenir une configuration aérothermique souhaitée dans l'habitacle.

25. Dispositif selon l'une des revendications 1 à 22, **caractérisé en ce que** le module de calcul (CAL) est apte à évaluer dynamiquement la température de confort (Tco), tandis que le module de commande (COM) est agencé pour modifier dynamiquement le fonctionnement de l'équipement en fonction de la température de confort couramment évaluée (Tco).

26. Dispositif selon l'une des revendications précédentes, **caractérisé en ce que**, l'installation comportant un dispositif de distribution d'air (8A,9A,8B,9B,8C,9C) pour répartir l'air ventilé entre une pluralité de régions de l'habitacle, le module de calcul est agencé pour évaluer une température de confort (Tco1,Tco2) dans chacune desdites régions, tandis que le module de commande (COM) est agencé pour modifier au moins le fonctionnement du dispositif de distribution en fonction desdites températures de confort (Tcol,Tco2).

27. Dispositif selon la revendication 26, **caractérisé en ce que** la première entrée est agencée pour recevoir une pluralité de consignes (C's) relatives à des configurations aérothermiques souhaitées dans des régions respectives de l'habitacle, tandis que le module de calcul est agencé pour évaluer une température de confort pour chacune desdites régions, sur la base desdites consignes.

**Claims**

1. A control device for a ventilation, heating and/or air-conditioning installation in the passenger compartment of a motor vehicle, of the type comprising:

   - at least one input (22) for receiving at least one signal representing information relating to a selected aerothermal parameter (Text, Vv, Fs),
   - an output (23) connected to at least one control actuator of equipment of the installation (1, 3, 11, 7, 8A, 8B, 8C), and
   - a control module (COM) connected to the said output and capable of monitoring the control actuator in order to modify the operation of the equipment,

   **characterised in that** the said input (22) is capable of receiving respective signals representing a local temperature (Tloc) and a local air velocity (Vloc) in a predetermined region of the passenger compartment, and **in that** it comprises a calculation module (CAL) capable of evaluating at least one comfort temperature (Tco) of a passenger (PAS) located in the said predetermined region of the passenger compartment, on the basis of the said aerothermal parameter, the said signals (Tloc, Vloc) and of selected models, whilst the control module (COM) is arranged to interact with the calculation module (CAL) in order to modify or not the operation of the equipment on the basis of this evaluation of the comfort temperature (Tco) which corresponds to a desired aerothermal configuration in the said region of the passenger compartment.

2. The device according to Claim 1, **characterised in that** the said input is capable of receiving at least one set of information representing a mean interior temperature in the passenger compartment (Tint), and **in that** the calculation module is arranged to estimate the said comfort temperature as a function of the interior temperature (Tint).

3. The device according to one of the preceding claims, **characterised in that** the input is capable of receiving respective signals representing a temperature (Tas) and a velocity (Vas) of the air which ventilates the installation.

4. The device according to Claim 3, **characterised in that** the calculation module is arranged to estimate the said local air temperature (Tloc) and velocity (Vloc) according to a selected air flow model of the passenger compartment involving the temperature (Tas) and velocity (Vas) of the ventilated air.

5. The device according to Claim 4, taken in combination with Claim 2, **characterised in that** the calculation module is arranged also to take account of the said interior temperature (Tint) in the air flow model of the passenger compartment in order to estimate the said local air temperature (Tloc) and velocity (Vloc).

6. The device according to claim 3, **characterised in that** the calculation module is arranged to evaluate, according to a selected thermal model of the passenger compartment, the mean interior temperature in the passenger compartment (Tint) as a function of the temperature (Tas) and velocity (Vas) of the ventilated air.

7. The device according to Claim 6, **characterised in that** the input is also capable of receiving a signal representing an exterior air temperature (Text), and **in that** the calculation module is arranged to take account of the exterior air temperature (Text) in the thermal model of the passenger compartment in order to estimate the said interior temperature (Tint).

8. The device according to one of Claims 6 and 7, **characterised in that** the input is also capable of receiving a signal representing a solar flux (Fs) incident upon the vehicle, and **in that** the calculation module is arranged also to take account of the solar flux (Fs) in the thermal model of the passenger compartment in order to evaluate the interior temperature (Tint).

9. The device according to one of the preceding claims, **characterised in that** the input is also capable of receiving a signal representing the temperature of at least one window (Tv) and/or of the structure (Ts) of the vehicle, and **in that** the calculation module is arranged to evaluate the comfort temperature (Tco) as a function of the said window (Tv) and/or structure (Ts) temperatures.

10. The device according to Claim 9, **characterised in that** the calculation module is arranged to evaluate the window (Tv) and/or structure (Ts) temperatures as a function of the ventilated air temperature (Tas) and velocity (Vas), preferably also taking account the exterior temperature (Text) and/or the solar flux.

11. The device according to one of Claims 3 to 10, **characterised in that** the input is capable of receiving signals representing respectively an air velocity (Vv) outside the passenger compartment, an output (Cv) of a propellant (1) of the installation, capable of delivering an air flow (F), and at least one position (Cd) of a distribution flap (8A, 8B, 8C) of the air flow in the passenger compartment, and **in that** the calculation module is arranged to evaluate the ventilated air velocity (Vas) as a function of the exterior air velocity, the output of the propellant and the position of the distribution flap.

12. The device according to Claim 11, **characterised in that** the input is capable of receiving information relating to the speed of the vehicle, whilst the calculation module is arranged to estimate the exterior air velocity as a function of the speed of the vehicle (Vv).

13. The device according to one of Claims 3, 11 and 12, **characterised in that** the input is capable of receiving signals representing a hot air temperature (Tc) which is delivered by a source of hot air of the installation, in particular a heating radiator (7), and an exterior air temperature (Text), and **in that** the calculation module is arranged to evaluate a ventilated air temperature (Tas) as a function of the ventilated air velocity (Vas) and of the said hot air (Tc) and exterior air temperatures (Text).

14. The device according to Claim 13, **characterised in that**, with the hot air source comprising a radiator through which flows a thermal exchange fluid, the input is capable of receiving a signal (Cc) representing the temperature of the said fluid in the radiator (7), whilst the calculation module is arranged to evaluate a hot air temperature (Tc) as a function of the flow rate of the fluid.

15. The device according to one of Claims 13 and 14, **characterised in that**, with the installation comprising a mixing flap (11) with an adjustable position for adjusting the ventilated air temperature (Tas), the input is also capable of receiving a signal (Ct) representing the position of the mixing flap, whilst the calculation module is arranged to evaluate the temperature of the ventilated air (Tas) as a function of the position of the mixing flap.

16. The device according to one of Claims 13 to 15, **characterised in that**, with the installation also comprising a cold air source (3), the input is also capable of receiving a signal (Cf) representing an air temperature emanating from the said cold air source, whilst the calculation module is arranged also to take account of the cold air temperature (Tf) in order to evaluate the ventilated air temperature (Tas).

17. The device according to Claim 7, **characterised in that**, with the installation also comprising an air-conditioning loop through which the variable refrigerant fluid flows and enabling the cold air temperature to be adjusted, the input is capable of receiving a signal (Cf) representing the pressure of the said refrigerant fluid.

18. The device according to one of the preceding claims, **characterised in that** the said input is arranged to receive a signal (Text) emanating from a temperature sensor outside the passenger compartment.

19. The device according to one of the preceding claims, **characterised in that** the input is arranged to receive a signal (Vv) emanating from a speed sensor of the vehicle.

20. The device according to one of the preceding claims, **characterised in that** the input is arranged to receive a signal (Fs) emanating from a solar flux sensor incident upon the vehicle.

21. The device according to one of the preceding claims, **characterised in that** it comprises:

> - a first input (21) capable of receiving a set point (C's) relating to a desired aerothermal configuration in the passenger compartment, and
> - a second input (22) capable of receiving at least the said signal representing information relating to the selected aerothermal parameter (Text, Vv, Fs),

whilst the calculation module (CAL) is capable of evaluating the comfort temperature (Tco) from the said aerothermal parameter taking into account the said set point (Cs).

22. The device according to Claim 21, **characterised in that** it comprises a memory (MEM) for storing the said set point (Cs), and **in that** the second input (22) is connected to the said memory (MEM) also for storing a value representing the said aerothermal parameter, whilst the calculation module (CAL) is capable of interacting with the memory (MEM) to evaluate the said comfort temperature (Tco).

23. The device according to Claim 22, **characterised in that** the calculation module (CAL) is capable of interacting with the memory (MEM) and the second input in order to estimate a variation in the aerothermal parameter (Vv, Text, Fs) and/or in the set point (Cs), whilst the control module (COM) is arranged to adjust, or not, the operation of the equipment as a function of at least one estimated variation of the aerothermal parameter and/or of the set point in order to maintain a comfort temperature (Tco) which corresponds to the desired aerothermal configuration in the passenger compartment.

24. The device according to Claim 22, **characterised in that** the memory (MEM) is capable of interacting with the calculation module (CAL) for storing the evaluated comfort temperature, and **in that** the calculation module is arranged to estimate a variation between an evaluated comfort temperature and a memorised comfort temperature, whilst the control module (COM) is arranged to adjust, or not, the operation of the equipment as a function of the estimated variation in the comfort temperature (Tco) in order to maintain a desired aerothermal configuration in the passenger compartment.

25. The device according to one of Claims 1 to 22, **characterised in that** the calculation module (CAL) is capable of dynamically evaluating the comfort temperature (Tco), whilst the control module (COM) is arranged to modify dynamically the operation of the equipment as a function of the currently evaluated comfort temperature (Tco).

26. The device according to one of the preceding claims, **characterised in that**, with the installation comprising an air distribution device (8A, 9A, 8B, 9B, 8C, 9C) for distributing the ventilated air between a plurality of regions of the passenger compartment, the calculation module is arranged to evaluate a comfort temperature (Tco1, Tco2) in each of the said regions, whilst the control module (COM) is arranged to modify at least the operation of the distribution device as a function of the said comfort temperatures (Tco1, Tco2).

27. The device according to Claim 26, **characterised in that** the first input is arranged to receive a plurality of set points (C's) relating to desired aerothermal configurations in respective regions of the passenger compartment, whilst the calculation module is arranged to evaluate a comfort temperature for each of the said regions on the basis of the said set points.

**Patentansprüche**

1. Steuereinrichtung für eine Lüftungsanlage, Heizung und/oder Klimaanlage einer Fahrgastzelle eines Fahrzeugs, vom Typ mit:

> - mindestens einem Eingang (22), um wenigstens ein entsprechendes Signal zu einer Information bezüglich eines gewählten aerothermischen Parameters zu empfangen (Text, Vv, Fs),
> - einem Ausgang (23), der mit mindestens einem Regelschalter einer Ausstattung der Anlage (1, 3, 11,7, 8A, 8B, 8C) verbunden ist, und
> - einem Steuermodul (COM), das an dem bezeichneten Ausgang angeschlossen und in der Lage ist, den Regelschalter zu steuern, um die Funktionsweise des Bauteils zu ändern,

**dadurch gekennzeichnet, dass** der bezeichnete Eingang (22) in der Lage ist, jeweils entsprechende Signale einer Temperatur (Tloc) und einer Geschwindigkeit (Vloc) der Raumluft in einer vorbestimmten Zone der Fahrgastzelle zu empfangen, und dass sie über ein Rechenmodul (CAL) verfügt, dass zumindest eine Wohlfühltemperatur (Tco) eines Insassen (PAS), welcher sich in dieser bestimmten Zone der Fahrgastzelle befindet mithilfe des bezeichneten aerothermischen Parameters der bezeichneten Signale (Tloc, Vloc) und der gewählten Modelle bestimmen kann, während das Steuermodul (COM) so vorgesehen ist, dass es mit dem Rechenmodul (CAL) zusammenarbeitet, um die Funktionsweise des Bauteils aufgrund dieser Bestimmung der Wohlfühltemperatur (Tco), die einer gewünschten aerothermischen Einstellung in der bestimmten Zone der Fahrgastzelle zugeordnet ist, verändern oder belassen kann.

2. Einrichtung nach Anspruch 1, **dadurch gekennzeichnet, dass** der bezeichnete Eingang in der Lage ist, mindestens eine einer mittleren Innentemperatur (Tint) entsprechende Information zu empfangen, und dass das Rechenmodul so vorgesehen ist, dass es die Wohlfühltemperatur aufgrund der Innentemperatur (Tint) schätzen kann.

3. Einrichtung nach einem der vorhergehenden Ansprüche, **dadurch gekennzeichnet, dass** der bezeichnete Eingang in der Lage ist, einer Temperatur (Tas) und einer Geschwindigkeit (Vas) der von der Anlage verströmten Luft entsprechenden Signale zu empfangen.

4. Einrichtung nach Anspruch 3, **dadurch gekennzeichnet, dass** das Rechenmodul so vorgesehen ist, dass es die bezeichnete Temperatur (Tloc) und Geschwindigkeit (Vloc) der Raumluft aufgrund eines für die Fahrgastzelle gewählten aerolischen Modells geshätzt werden kann und die Temperatur (Tas) und die Geschwindigkeit (Vas) der verströmten Luft einbezieht.

5. Einrichtung nach Anspruch 4 in Verbindung mit Anspruch 2, **dadurch gekennzeichnet, dass** das Rechenmodul so vorgesehen ist, dass es darüber hinaus die bezeichnete Innentemperatur (Tint) des für die Fahrgastzelle gewählten aerolischen Modells einbezieht, um die bezeichnete Temperatur (Tloc) und die Geschwindigkeit (Vloc) der Raumluft zu schätzen.

6. Einrichtung nach Anspruch 3, **dadurch gekennzeichnet, dass** das Rechenmodul so vorgesehen ist, dass es aufgrund eines für die Fahrgastzelle gewählten thermischen Modells die mittlere Innentemperatur der Fahrgastzelle (Tint) aufgrund der Temperatur (Tas) und der Geschwindigkeit (Vas) der verströmten Luft bestimmen kann.

7. Einrichtung nach Anspruch 6, **dadurch gekennzeichnet, dass** der Eingang in der Lage ist, darüber hinaus ein einer Temperatur der Außenluft (Text) im thermischen Modell der Fahrgastzelle entsprechendes Signal zu empfangen, um die bezeichnete Innentemperatur (Tint) zu schätzen.

8. Einrichtung nach einem der Ansprüche 6 und 7, **dadurch gekennzeichnet, dass** der Eingang in der Lage ist, darüber hinaus ein der auf dem Fahrzeug auftreffenden Sonnenstrahlung (Fs) entsprechendes Signal zu empfangen, und dass das Rechenmodul so vorgesehen ist, dass es darüber hinaus die Sonnenstrahlung (Fs) im thermischen Modell der Fahrgastzelle einbezieht, um die Innentemperatur (Tint) zu bestimmen.

9. Einrichtung nach einer der vorhergehenden Ansprüche, **dadurch gekennzeichnet, dass** der Eingang in der Lage ist, darüber hinaus zumindest ein der Temperatur einer Scheibe (Tv) und/oder des Aufbaus (Ts) des Fahrzeugs entsprechendes Signal zu empfangen, und dass das Rechenmodul so vorgesehen ist, dass es die Wohlfühltemperatur (Tco) aufgrund der bezeichneten Scheibentemperatur (Tv) und/oder des Aufbaus (Ts) bestimmt.

10. Einrichtung nach Anspruch 9, **dadurch gekennzeichnet, dass** das Rechenmodul so vorgesehen ist, dass es die Scheibentemperatur (Tv) und/oder die Strukturtemperatur (Ts) aufgrund der Temperatur (Tas) und der Geschwindigkeit (Vas) der verströmten Luft, vorzugsweise unter Einbeziehung der Außentemperatur (Text) und/oder der Sonnenstrahlung bestimmt.

11. Einrichtung nach einem der Ansprüche 3 bis 10, **dadurch gekennzeichnet, dass** der Eingang in der Lage ist, darüber hinaus zumindest jeweils entsprechende Signale einer Luftgeschwindigkeit (Vv) außerhalb der Fahrgastzelle, eines Leistungsbereichs (Cv) eines Pulsgebers (1) der Anlage, der einen Luftstrom (F) abgeben kann, und mindestens einer Position (Cd) einer Verteilerklappe (8A, 8B, 8C) des Luftstroms in der Fahrgastzelle zu empfangen, und dass das Rechenmodul so vorgesehen ist, dass es die Geschwindigkeit der verströmten Luft (Vas) aufgrund der Geschwindigkeit der Außenluft, des Pulsgebertakts und der Position der Verteilerklappe bestimmen kann.

12. Einrichtung nach Anspruch 11, **dadurch gekennzeichnet, dass** der Eingang in der Lage ist, eine Information bezüglich der Geschwindigkeit des Fahrzeugs zu empfangen, während das Rechenmodul so vorgesehen ist, dass es die Geschwindigkeit der Außenluft aufgrund der Fahrzeuggeschwindigkeit (Vv) bewerten kann.

13. Einrichtung nach einem der Ansprüche 3, 11 und 12, **dadurch gekennzeichnet, dass** der Eingang in der Lage ist, jeweils entsprechende Signale einer Temperatur der Warmluft (Tc) aus einer Warmluftquelle der Anlage, insbesondere aus dem Kühler der Heizung (7), und einer Temperatur der Außenluft (Text) zu empfangen, und dass das Rechenmodul so vorgesehen ist, dass es die Temperatur der verströmten Luft (Tas) aufgrund der Geschwindigkeit der verströmten Luft (Vas) und der bezeichneten Temperaturen der Warmluft (Tc) und der Außenluft (Text) bestimmen kann.

14. Einrichtung nach Anspruch 13, **dadurch gekennzeichnet, dass**, da die Warmluftquelle einen Kühler besitzt, der von einem thermischen Austauschmittel durchflossen wird, der Eingang in der Lage ist, darüber hinaus ein entsprechendes Signal (Cc) der Temperatur der bezeichneten Flüssigkeit im Kühler (7) zu empfangen, und dass das Rechenmodul so vorgesehen ist, es die Temperatur der Warmluft (Tc) aufgrund des Durchsatzes der Flüssigkeit bestimmen kann.

15. Einrichtung gemäß einem der Ansprüche 13 und 14, **dadurch gekennzeichnet, dass**, da die Anlage eine Mischklappe (11) mit regelbarer Stellung besitzt, um die Temperatur der verströmten Luft (Tas) anzupassen, der Eingang in der Lage ist, darüber hinaus ein entsprechendes Signal (Ct) der Stellung der Mischklappe zu empfangen, während das Rechenmodul so vorgesehen ist, dass es die Temperatur der verströmten Luft (Tas) aufgrund der Stellung der Mischklappe bestimmen kann.

16. Einrichtung nach einem der Ansprüche 13 und 15, **dadurch gekennzeichnet dass**, da die Anlage darüber hinaus eine Kaltluftquelle (3) besitzt, der Eingang in der Lage ist, darüber hinaus ein entsprechendes Signal (Cf) der Temperatur der aus der bezeichneten Kaltluftquelle verströmten Luft zu empfangen, während das Rechenmodul so vorgesehen ist, dass es darüber hinaus die Temperatur der Kaltluft (Tf) berücksichtigt, um die Temperatur der verströmten Luft (Tas) zu bestimmen.

17. Einrichtung nach Anspruch 7, **dadurch gekennzeichnet dass**, da die Anlage darüber hinaus eine von einem Kühlmittel mit variablem Druck durchflossene Kühlschleife besitzt, das es ermöglicht, die Temperatur der Kaltluft zu regeln, der Eingang in der Lage ist, ein entsprechendes Signal (Cf) des Drucks des bezeichneten Kühlmittels zu empfangen.

18. Einrichtung nach einem der vorhergehenden Ansprüche, **dadurch gekennzeichnet, dass** der bezeichnete Eingang so vorgesehen ist, dass er ein von einem außerhalb der Fahrgastzelle angebrachten Temperaturfühler ausgegebenes Signal (Text) empfangen kann.

19. Einrichtung nach einem der vorhergehenden Ansprüche, **dadurch gekennzeichnet, dass** der bezeichnete Eingang so vorgesehen ist, dass er ein von einem Geschwindigkeitsmesser ausgegebenes Signal (Vv) empfangen kann.

20. Einrichtung nach einem der vorhergehenden Ansprüche, **dadurch gekennzeichnet, dass** der bezeichnete Eingang so vorgesehen ist, dass er ein von einem Fühler für Sonnenstrahlung ausgegebenes Signal (Fs) empfangen kann.

21. Einrichtung nach einem der vorhergehenden Ansprüche, **dadurch gekennzeichnet, dass** sie beinhaltet:

    - einen ersten Eingang (21), der einen entsprechenden eingestellten Wert (C's) einer gewünschten aerothermischen Einstellung in der Fahrgastzelle empfangen kann, und
    - einen zweiten Eingang (22), der zumindest das bezeichnete entsprechende Signal einer Information zum gewählten aerothermischen Parameter (Text, Vv, Fs) empfangen kann,

    während das Rechenmodul (CAL) in der Lage ist, die Wohlfühltemperatur (Tco) aus dem bezeichneten aerothermischen Parameter unter Einbeziehung vom bezeichneten eingestellten Wert (Cs) zu bestimmen.

22. Einrichtung nach Anspruch 21, **dadurch gekennzeichnet, dass** sie einen Speicher (MEM) zum Speichern des bezeichneten eingestellten Werts (Cs) besitzt und dass der zweite Eingang (22) an diesen Speicher (MEM) angeschlossen ist, um darüber hinaus einen entsprechenden Wert des bezeichneten aerothermischen Parameters zu speichern, und dass das Rechenmodul (CAL) so vorgesehen ist, dass es mit dem Speicher (MEM) zusammenarbeitet, um die bezeichnete Wohlfühltemperatur (Tco) zu bestimmen.

23. Einrichtung nach Anspruch 22, **dadurch gekennzeichnet, dass** das Rechenmodul (CAL) in der Lage ist, mit dem Speicher (MEM) und dem zweiten Eingang zusammenzuarbeiten, um eine Anpassung des aerothermischen Parameters (Vv, Text, Fs) und/oder des eingestellten Werts (Cs) zu bewerten, während das Steuermodul (COM) so vorgesehen ist, dass es die Funktionsweise des Bauteils aufgrund mindestens einer festgestellten Abweichung des aerothermischen Parameters und/oder des eingestellten Werts anpassen oder belassen kann, um die Wohlfühltemperatur (Tco) beizubehalten, die der gewünschten aerothermischen Einstellung in der Fahrgastzelle entspricht.

24. Einrichtung nach Anspruch 22, **dadurch gekennzeichnet, dass** der Speicher (MEM) in der Lage ist, mit dem Rechenmodul (CAL) zusammenzuarbeiten, um eine die bestimmte Wohlfühltemperatur (Tco) zu speichern, und dass das Rechenmodul so vorgesehen ist, dass es eine Abweichung zwischen einer bestimmten Wohlfühltemperatur und einer gespeicherten Wohlfühltemperatur feststellen kann, während das Steuermodul (COM) so vorgesehen ist, dass es die Funktionsweise des Bauteils aufgrund der festgestellten Abweichung von der Wohlfühltemperatur (Tco) anpassen oder belassen kann, um die gewünschte aerothermische Einstellung in der Fahrgastzelle beizubehalten.

25. Einrichtung nach einem der Ansprüche 1 bis 22, **dadurch gekennzeichnet, dass** das Rechenmodul (CAL) in der Lage ist, dynamisch die Wohlfühltemperatur (Tco) zu bestimmen, während das Steuermodul (COM) so vorgesehen ist, dass es die Funktionsweise des Bauteils aufgrund der ständig bestimmten Wohlfühltemperatur dynamisch anpasst.

26. Einrichtung nach einem der vorhergehenden Ansprüche, **dadurch gekennzeichnet, dass**, da die Anlage eine Verteilvorrichtung der Luft besitzt (8A, 9A, 8B, 9B, 8C, 9C), um die verströmte Luft auf die verschiedenen Zonen der Fahrgastzelle zu verteilen, das Rechenmodul in der Lage ist, eine Wohlfühltemperatur (Tco1, Tco2) in jeder dieser Zonen zu bestimmen, während das Steuermodul (COM) so vorgesehen ist, dass es zumindest die Funktionsweise des Bauteils aufgrund der bezeichneten Wohlfühltemperaturen (Tco1, Tco2) anpassen kann, einer festgestellten Abweichung des aerothermischen Parameters und/oder des eingestellten Werts anpassen oder belassen kann, um die Wohlfühltemperatur (Tco) beizubehalten, die der gewünschten aerothermischen Einstellung in der Fahrgastzelle entspricht.

27. Einrichtung nach Anspruch 26, **dadurch gekennzeichnet, dass** der erste Eingang so vorgesehen ist, dass er eine Vielzahl den gewünschten aerothermischen Einstellungen in den jeweiligen Zonen der Fahrgastzelle entsprechende eingestellte Werte (C's) empfangen kann, während das Steuermodul so vorgesehen ist, dass es eine Wohlfühltemperatur für jede der bezeichneten Zonen aufgrund der bezeichneten eingestellten Werte bestimmt.

EP 1 132 225 B1

FIG.1

21

$C'_d$  $C'_v$  $C'_f$  $C'_t$  $C'_c$

COM

23

CAL

REG

| MC | MAH | MTH | MTI | MAI |
|---|---|---|---|---|
| | | Tv | | |
| Tco | | Ts | | |
| | Vloc ← | Tint | | |
| | Tloc ← | Tas ← | Tas | |
| | | Vas ← | Vas ← | Vas |

OB

$\mu P$

MEM — $C_s$ , $V_v$ , $T_{ext}$ , $\phi_s$
$C_f$ , $C_v$ , $C_t$ , $C_c$
$C_d$

21

22

$C'_s$    $V_v$    $T_{ext}$    $\phi_s$

FIG.2

FIG.3

FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0968855 A

- FR 2779097